# EUROPEAN PATENT SPECIFICATION

(11) **EP 4 334 085 B1**
(45) Date of publication and mention of the grant of the patent: **09.07.2025**
(21) Application number: 22728134.2
(22) Date of filing: 05.05.2022
(51) Int. Cl.: B24C 7/00, B65G 65/48, B05B 7/14

(54) **A PARTICULATE MATERIAL BLASTING APPARATUS AND METHOD OF BLASTING A SURFACE**
VORRICHTUNG UND VERFAHREN ZUM STRAHLEN EINER OBERFLÄCHE MIT PARTIKELFÖRMIGEM MATERIAL
APPAREIL DE PROJECTION DE MATIÈRE PARTICULAIRE ET PROCÉDÉ DE SABLAGE D'UNE SURFACE

(30) Priority: 05.05.2021 GB 202106398
(43) Date of publication of application: 13.03.2024
(73) Proprietor: Swiss Industrial Consulting & Technology SA, 1110 Morges (CH)
(72) Inventor: GANSHOF VAN DER MEERSCH, Nicolas, 1110 Morges (CH)
(74) Representative: Purdylucey Intellectual Property
(86) International application number: PCT/EP2022/062228
(87) International publication number: WO 2022/234055

(56) References cited:
- WO-A1-2007/107322
- IT-A1- MO20 140 335
- US-A- 2 092 201
- US-A- 2 684 788
- US-A- 2 907 444
- US-A- 4 267 946
- US-A1- 2008 261 496

## Description

### Field of the Invention

The present invention relates to a particulate material blasting apparatus according to the preamble of claim 1. Also contemplated is a method of blasting a surface with particulate material.

### Background to the Invention

Dosing devices for non-abrasive blasting are known and generally comprise a product feed conduit, a dosing chamber for metering the blasting media, and a pressurised fluid line into which the metered media is dosed. The mixture of metered media and fluid are fed under pressure to a dispensing nozzle. Conventional dosing systems use a pressure differential to meter the amount of media charged into the fluid. An advantage of such a system is that it can be used with both abrasive and non-abrasive material; a disadvantage is that the accuracy of dosing is poor. In an attempt to address the dosing accuracy problem, the Applicant devised a dosing device comprising a spinning disk with a hole, wherein media is dosed when the hole rotates into register with media feed and supply conduits. An example of such a device is described in US Patent Serial No. 6,896,197. With this type of device, a seal is required between spinning disk and the plates between the disk is mounted to prevent seepage of media when the disk is not operational. As the adjustment between the disk and the plates has to be very small, the seal is rapidly destroyed due to the friction between the disks and the plates; this problem is exacerbated by the media which has an abrasive effect on the disks and plates, resulting in the device only being usable with non-abrasive material.

United States Patent No: 3,758,004 describes a dosing device for particulate material having a dosing chamber within which is mounted a rotatable rotor for delivery of particulate material into a dispensing outlet. The device is designed with very close tolerances between the periphery of the rotor and the walls of the dosing chamber to avoid passage of particulate material into the dispending outlet when the rotor is not turning. Such close tolerances cause friction and wear on the adjacent surfaces of the rotor and the dispensing chamber, which problems are exacerbated by any media which falls into tight gaps between the surfaces.

It is an objective of the invention to provide an improved seat-table.

EP0652078 describes a device for feeding particles into a flow of air. The device illustrated in Figures 27 to 29 comprises a hopper, a particulate material discharge area disposed on one side of a base of the hopper, and an inlet of a nozzle disposed in the discharge area which draws the particulate material into the flow of air in the nozzle. The discharge area and hopper are separated by a rotary valve which rotates counter-clockwise (Figure 27) to pull material down and around and into the discharge area. The rotary valve acts as a stop to prevent material flowing into the discharge area, and this requires very close tolerances between the rotary valve and the housing which are prone to being clogged with particulate material.

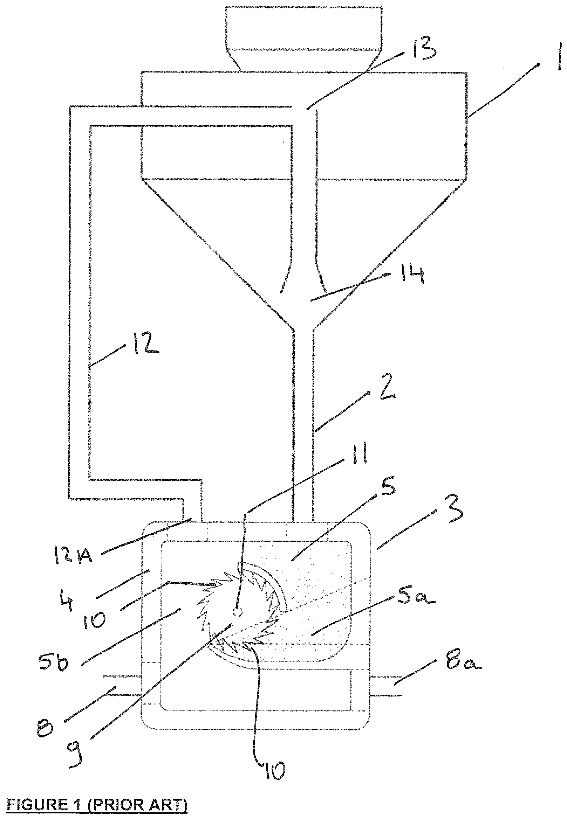

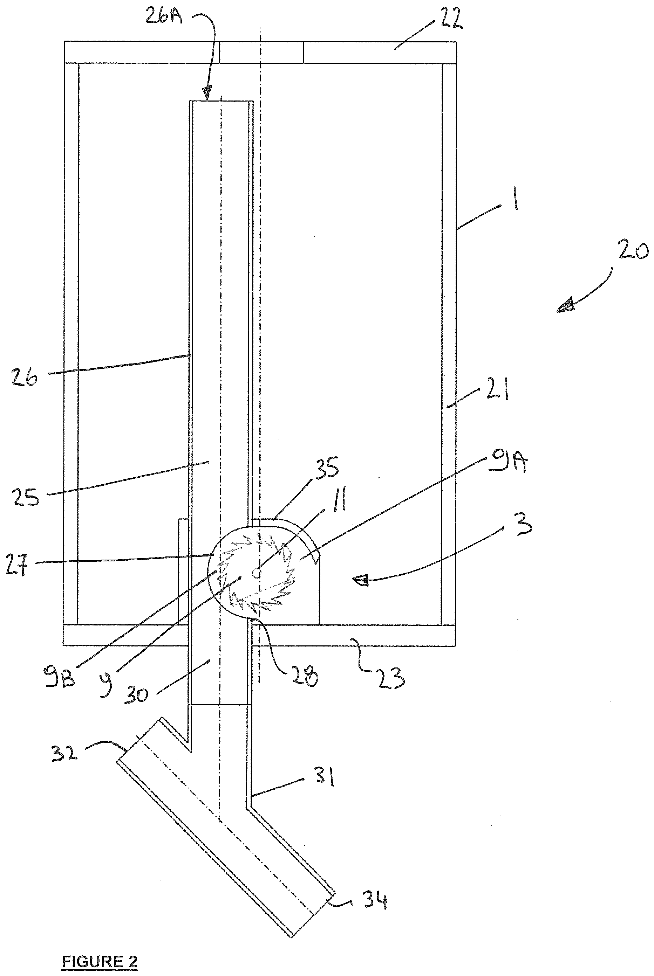

JP H0994765 describes a dosing device for particulate material having a hopper 12 to store material and a dosing device 2 that is separate to the hopper and connected thereto by a conveying tube 15. The dosing device comprises a rotating wheel with pockets that lift up particulate material to an outlet tube disposed above the wheel which suck particulate material up into the outlet tube. The device is bulky and has separate parts which complicates manufacture. As the hopper tank is pressurised, large pressure gradients are generated across the wall of the tank which requires the tank to be made from a strong material. In addition, a pressure equalisation conduit (23 in Figures 1 and 2) is required to balance pressure between the pressurised storage tank and the dosing device.

WO2007/107322 describes a dosing device for particulate material and blasting apparatus. Referring to Figures 1 and 5 of WO2007/107322, the dosing device has a dosing chamber with a material receiving side, a material dispensing side, and a rotor interposed between the dispensing and receiving sides. Material is delivered onto a base of the material receiving side by a feed conduit from the pressurised storage tank, and rotation of the rotor lifts the material up (typically in a scooping action) from the receiving side and delivers it to the delivery side of the dosing chamber. The base of the material receiving side is disposed with respect of the feed conduit such that particulate material will not spill into the delivery side of the dosing chamber when the rotor is static. This enables the device to be made without close tolerances between the rotor and the adjacent walls of the dosing chamber, thereby minimising wear and tear on these components. As the tank is pressurised, large pressure gradients are generated across the wall of the tank which requires the tank to be made from a strong material. In addition, a pressure equalisation conduit (29 in Figure 5) is required to balance pressure between the pressurised storage tank and the dosing device.

It is an object of the invention to provide a simpler particulate material blasting apparatus.

### Summary of the Invention

The objective is met by the provision of a blasting apparatus according to independent claim 1 in which the dosing device is located inside the pressurised storage reservoir, thus removing the pressure gradient between the dosing device and the storage reservoir and the dosing device and obviating the requirement for a pressure balancing conduit. In addition, as the dosing device and particulate material (media) are contained within the storage reservoir, the walls of the storage reservoir do not have to endure large pressure gradients and may be made of cheaper, thinner materials. This arrangement also allows the delivery conduit to function as a pressure equalisation conduit.

In a first aspect, the invention provides a particulate material blasting apparatus comprising a particulate material dosing device, a particulate material storage tank adapted to feed particulate material to the dosing device, and a delivery conduit to deliver particular material into a pressurised gas line. Typically, the delivery conduit has an upper part comprising a first inlet aperture disposed in the particulate material storage tank and a lower part comprising an outlet disposed outside the particulate material storage tank. The delivery conduit is generally disposed vertically (or nearly vertically) with respect to the base of the storage tank so that particulate material falls from the inlet to the outlet easily and under the force of gravity. The tank generally has a base, top and sidewalls. The dosing device comprises a rotor comprising a series of scooping pockets mounted along a circumference of the rotor configured to rotate to scoop-up particular material from a particulate material receiving side of the rotor and deliver it up and around to a delivery side of the rotor where it falls into the delivery conduit through the inlet and falls downwardly into a pressurised gas line. The dosing device is located in the particulate material storage tank and the delivery conduit comprises an outlet disposed outside the particulate material storage tank.

According to the invention, the upper part (of the delivery conduit) comprises an elongated pipe and the first inlet aperture of the delivery conduit is disposed adjacent the base of the particulate material storage tank, wherein the rotor is mounted partly within the first inlet aperture such that a particulate material receiving side of the rotor is disposed outside the pipe and a particulate material receiving side of the rotor is disposed inside the pipe.

Thus, the dosing device does not require its own housing and the base of the tank functions as the base of the dosing device.

Furthermore, the delivery conduit comprises a second inlet aperture disposed toward a top of the particulate material storage tank. This inlet allows the delivery conduit to also function as a pressure equalisation conduit and normalise pressure between the top and bottom of the pressurised tank.

In any embodiment, the dosing device may comprise a baffle attached to the delivery conduit dimensioned to curve around and cover a top (and preferably the sides) of the particulate material receiving side of the rotor. This serves to guide particulate material away from the top of the rotor and towards the material receiving side of the rotor, preventing the rotor becoming clogged with material.

In any embodiment, the apparatus may comprise a bearing, gearbox and a motor for the rotor.

In any embodiment, the bearing, gearbox and optionally the motor may be contained within a sealed housing coupled to the base of the particulate material storage tank.

In any embodiment, the outlet of the delivery conduit may be configured for fluidically coupling to a pressurised gas line. In any embodiment, the outlet of the delivery conduit comprises a T-coupling with an inlet configured for fluidic coupling to a pressurised gas line and an outlet configured for coupling to a blasting nozzle conduit.

In any embodiment, the delivery conduit may be disposed with respect to the particulate material storage tank such that particulate material flows downwardly from the first inlet inside the tank towards the outlet outside the tank under the force of gravity

In any embodiment, the top of the particulate material storage tank may include a fitting for receiving a top of the delivery conduit and securing the delivery conduit in position (e.g., disposed vertically) within the particulate material storage tank.

In an embodiment, the rotor may be coupled to the particulate material storage tank so as to provide a clearance between the rotor and the base of the tank while still be positioned to scoop up material sitting on the base of the tank.

In any embodiment, the rotor may be coupled to the particulate material storage tank so as to provide a clearance between the rotor and the base of the tank of about 0.1 to about 2 cm, about 0.1 to about 1.0 cm, about 0.2 to about 0.6 cm.

In any embodiment, the rotor may be mounted in the aperture of the delivery conduit such that an axle of the rotor is perpendicular with a longitudinal axis of the delivery conduit.

In any embodiment, the rotor may be mounted in the aperture of the delivery conduit such that an axle of the rotor is in line with a sidewall of the delivery conduit.

In any embodiment, the delivery conduit and particulate material storage tank may each comprise a cylindrical pipe.

In any embodiment, the delivery conduit may have a diameter that is about 10-25% of a diameter of the particulate material storage tank.

In any embodiment, the rotor comprises at least two series of scooping pockets mounted along the circumference of the rotor, and in which the pockets of one series are circumferentially staggered with respect to the pockets of the other series.

In any embodiment, the dosing device may comprise a plurality of rotors, in which the scooping pockets of one rotor are typically circumferentially staggered with respect to those of the other rotor.

In any embodiment, the pockets may be formed by tooth-like formations which project from the circumference of the rotor.

In any embodiment, the apparatus of the invention may comprise a pressurised fluid line. In any embodiment, the apparatus comprises a nozzle fluidically connected to the pressurised fluid line. In any embodiment, the apparatus comprises a motor configured to provide pressurised fluid to the pressurised fluid line.

In another aspect, the invention provides a method according to claim 13 of blasting a surface with particulate material which employs a particulate material blasting apparatus according to the invention.

The method comprises the steps of:
providing a reservoir of particulate material in the particulate material storage tank;
actuating a motor to rotate the rotor at a desired speed corresponding to the desired material dosing rate, and dosing particulate material through the delivery conduit into a pressurised gas line disposed externally to the storage reservoir; and
blasting a surface by employing a nozzle fluidically coupled to the pressurised gas line to direct a stream of pressurised gas and particulate material at the surface.

Other aspects and preferred embodiments of the invention are defined and described in the other claims set out below.

### Brief Description of the Figures

**FIG. 1** **(Prior art)** shows a particulate material blasting apparatus of the prior art.
**FIG.2** shows a particulate material blasting apparatus of the invention.

### Detailed Description of the Invention

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

Referring initially to Figure 1 (Prior art), a particulate material blasting apparatus, according to the preamble of independent claim 1, of WO2007/107322 is described and comprises a media tank 1 with a gravity flow media outlet 2 feeding into a dosing device 3. The dosing device comprises a housing 4 defining a dosing chamber 5 with a product receiving side 5a and a product delivery side 5b, a product feed conduit, and a product delivery conduit. The product delivery conduit feeds into a pressurised air supply line 8 which forms a product outlet 8a. Although not shown in the Figures, the product outlet line 8a feeds into a dispensing nozzle. In more detail, a rotor 9 having a plurality of circumferentially formed pockets 10 is rotatably mounted within the dosing chamber 3. Each pocket 10 is formed by a tooth-like formation which extends from a circumference of the rotor 9. The rotor 9 includes an axle 11 which engages with a motor (not shown) for rotation of the rotor 9. The speed of rotation of the rotor 9 may be decided by the operator according to the blasting conditions required. A pressure equalisation conduit 12 is provided between an opening 12A in a top of the product delivery side 5b of the dosing chamber and the top 13 and bottom 14 of the media tank 1.

Referring to Figure 2, the blasting apparatus of the invention, indicated generally by the reference numeral 20, is described in which parts described previously are assigned the same reference numerals. The blasting apparatus comprises a particulate material storage tank 1 having a cylindrical sidewall 21 formed of DN100 stainless steel, a top wall 22, a bottom wall 23, and a dosing device 3 inside the tank. The bottom wall (flange) may be formed of cast aluminium. In use the tank is pressurised with sealing O-rings (not shown) provided at the top and bottom to seal with top and bottom walls to the sidewall. The top also includes an opening with a door (not shown) allowing the tank to be filled with media without having to remove the top wall and a fill-level sensor.

The dosing device 3 is comprised of a rotor 9, having a media receiving side 9A and a media delivery side 9B. The apparatus 20 also comprises a delivery conduit 25. The delivery conduit has an upper part within the tank and a lower part outside the tank. The upper part comprises an elongated pipe 26 disposed vertically and slightly asymmetrically within the tank 1 such that a top of the pipe 26 is disposed adjacent the top wall 22 of the tank and has an inlet aperture 26A. The pipe has a circular aperture 27 disposed adjacent the bottom wall 23 of the tank, and the rotor is mounted to the bottom wall 23 of the tank such that the media receiving side 9A of the rotor 9 is disposed outside the pipe 26 and the media delivery side 9B of the rotor 9 is disposed inside the pipe 26, with a clearance between the rotor 9 and bottom wall 23 of the tank 1 of about 0.2 cm to 0.6 cm. The aperture 27 is positioned in the delivery pipe just above the bottom wall 23 so as to provide a lip 28 above the bottom wall. This helps prevent media falling into the delivery conduit when the rotor is static. A curved baffle 35 is attached to the delivery conduit 25 just above the aperture 27 so as to cover a top and sides of the media receiving side 9A of the rotor 9 and guide material towards a material receiving side of the dosing device and prevent material falling into the delivery conduit when the rotor is static. As shown in Figure 2, the axle 11 of the rotor is positioned in-line with the sidewall of the delivery conduit 25 and generally perpendicular with a longitudinal axis of the delivery conduit 25. Although not illustrated, the tank comprises a sealed housing disposed on each side of the rotor for holding the bearings and gearing of the rotor and the motor.

The lower part of the delivery conduit 25 passes through a sealed aperture in the bottom wall 23 and has an outlet 30 that is coupled to a pressurised line by a T-fitting 31 with an inlet 32 configured for fluidic coupling with a pressurised gas line (not shown) and an outlet 34 configured for coupling to a nozzle line (not shown).

Although not illustrated, the rotor has the same construction as that illustrated in WO2007/107322 with three axially aligned rotors each having a series of scooping pockets configured to pick up material from a media receiving side of the dosing device and deliver media up and around to a material delivery side of the dosing device where it falls into the delivery conduit.

In use, as per the method of independent claim 13, a particulate material such as particles of agglomerated calcium carbonate is added to the tank and comes to rest on the bottom wall of the tank at the media receiving side of the dosing device. The lip and curved baffle serve to prevent media falling into the delivery conduit until the rotor is actuated.

Due to the disposition of the rotor with respect to the conduit and the bottom wall of the tank, rotation of the rotor results in media being scooped up and lifted upwards in the circumferential pockets and delivered from a product receiving side of the dosing device to a product delivery side where the product falls into the product delivery conduit and is delivered into the pressurised air supply line. Depending on the type of blasting operation required, the air pressure in the air supply line may be varied, and the amount of particulate product metered into the outlet may be varied by varying the speed of the rotor.

Compared with the blasting apparatus of the prior art, the apparatus of the invention allows the costs of manufacture and assembly to be reduced by simplifying the whole assembly. The dosing unit and the media are put into the same, evenly pressured enclosure allowing the walls and components to be thin and cheap, even made from soft plastic, because they will not endure high pressure gradients between inner and outer surfaces. In the prior art apparatus, the dosing unit and the tank are separated and connected through two pipes, one that allows the media to flow in the dosing unit and the other that allows balancing of the pressures between the dosing device and tank. With the apparatus of the invention, one conduit performs both roles. Moreover, as the dosing unit is now included in the tank, the pressure will be the same everywhere and the balancing of pressures is eased.

### Equivalents

The foregoing description details presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. A particulate material blasting apparatus (20) comprising:
a particulate material dosing device (3);
a particulate material storage tank (1) having a base (23), top (22) and sidewalls (21) and adapted to feed particulate material to the dosing device; and
a delivery conduit (25) to deliver particulate material into a pressurised gas line,
the particulate material dosing device comprising a rotor (9) comprising a series of scooping pockets mounted along a circumference of the rotor configured to rotate to scoop-up particulate material from a particulate material receiving side of the dosing device and deliver it up and around to a delivery side of the dosing device where it falls into the delivery conduit (25),
the particulate material dosing device (3) being located in the particulate material storage tank and the delivery conduit comprising an upper part, disposed within the particulate material storage tank (1), having a first inlet aperture (27) and a lower part, disposed outside the particulate material storage tank (1), having an outlet (30) to deliver particulate material into a pressurised gas line,
**characterised in that** the upper part comprises an elongated pipe (26), **in that** the first inlet aperture (27) is disposed adjacent the base (23) of the particulate material storage tank, wherein the rotor (9) is mounted partly within the first inlet aperture such that a particulate material receiving side (9A) of the rotor is disposed outside the pipe (26) and a particulate material delivery side (9B) of the rotor is disposed inside the pipe (26) and **in that** the upper part of the delivery conduit (25) comprises a second inlet aperture (26A) disposed toward a top of the particulate material storage tank.

2. A particulate material blasting apparatus according to Claim 1, including a baffle (35) attached to the delivery conduit (25) dimensioned to curve around and cover a top and sides of the particulate material receiving side (9A) of the rotor.

3. A particulate material blasting apparatus according to any preceding Claim, including a bearing, gearbox and optionally a motor for the rotor, in which the bearing, gearbox and optionally the motor are contained within a sealed housing coupled to the base (23) of the particulate material storage tank (1).

4. A particulate material blasting apparatus according to any preceding Claim, in which the outlet (30) is configured for fluidically coupling to a pressurised gas line.

5. A particulate material blasting apparatus according to any preceding Claim, in which the top (22) of the particulate material storage tank includes a fitting for receiving a top of the delivery conduit (25) and securing the delivery conduit in position within the particulate material storage tank (1).

6. A particulate material blasting apparatus according to any preceding Claim, in which a clearance between the rotor (9) and the base (23) of the particulate material storage tank (1) is about 0.2 cm to about 0.6 cm.

7. A particulate material blasting apparatus according to any preceding Claim, in which the rotor (9) is mounted in the aperture (27) of the delivery conduit (25) such that an axle (11) of the rotor is perpendicular with a longitudinal axis of the delivery conduit.

8. A particulate material blasting apparatus according to any preceding Claim, in which the rotor (9) is mounted in the aperture (27) of the delivery conduit such that an axle (11) of the rotor is in line with a sidewall of the delivery conduit.

9. A particulate material blasting apparatus according to any preceding Claim, in which the delivery conduit (25) and particulate material storage tank (1) comprise a cylindrical pipe.

10. A particulate material blasting apparatus as claimed in any preceding Claim and comprising at least two series of scooping pockets mounted along the circumference of the rotor (9), and in which the pockets of one series are circumferentially staggered with respect to the pockets of the other series.

11. A particulate material blasting apparatus as claimed in any preceding Claim and comprising a plurality of rotors, in which the scooping pockets of one rotor are circumferentially staggered with respect to those of the other rotor(s).

12. A particulate material blasting apparatus as claimed in any preceding Claim, in which the pockets are formed by tooth-like formations which project from the circumference of the rotor.

13. A method of blasting a surface with particulate material which employs a particulate material blasting apparatus (2) according to any of Claims 1 to 12, which method comprises the steps of:
providing a reservoir of particulate material in the particulate material storage tank;
actuating a motor to rotate the rotor at a desired speed corresponding to the desired material dosing rate, and dosing particulate material through the delivery conduit into a pressurised gas line disposed externally to the storage reservoir; and
blasting a surface by employing a nozzle fluidically coupled to the pressurised gas line to direct a stream of pressurised gas and particulate material at the surface.

## Patentansprüche

1. Partikelmaterialstrahlvorrichtung (20), die Folgendes umfasst:
eine Partikelmaterialdosiereinrichtung (3),
einen Partikelmaterialspeicherbehälter (1) mit einem Unterteil (23), einem Oberteil (22) und Seitenwänden (21), der so ausgelegt ist, dass er Partikelmaterial in die Dosiereinrichtung einspeist, und
eine Zuleitung (25) zum Zuführen von Partikelmaterial in eine druckbeaufschlagte Gasleitung, wobei die Partikelmaterialdosiereinrichtung einen Rotor (9) mit einer Reihe von Schöpfbechern umfasst, die an einem Umfang des Rotors entlang installiert und so ausgelegt sind, dass sie sich drehen und so auf einer Partikelmaterialeingangsseite der Dosiereinrichtung Partikelmaterial aufnehmen und es oben herum einer Zufuhrseite der Dosiereinrichtung zuführen, wo es in die Zuleitung (25) fällt,
wobei sich die Partikelmaterialdosiereinrichtung (3) in dem
Partikelmaterialspeicherbehälter befindet und die Zuleitung einen oberen Teil mit einer ersten Einlassöffnung (27), der in dem Partikelmaterialspeicherbehälter (1) angeordnet ist, und einen unteren Teil mit einem Auslass (30) zum Zuführen von Partikelmaterial in eine druckbeaufschlagte Gasleitung umfasst, der außerhalb des
Partikelmaterialspeicherbehälters (1) angeordnet ist,
**dadurch gekennzeichnet, dass** der obere Teil ein längliches Rohr (26) umfasst,
dass die erste Einlassöffnung (27) neben dem Unterteil (23) des Partikelmaterialspeicherbehälters angeordnet ist, wobei der Rotor (9) teilweise in der ersten Einlassöffnung installiert ist, so dass eine Partikelmaterialeingangsseite (9A) des Rotors außerhalb des Rohrs (26) und eine Partikelmaterialzufuhrseite (9B) des Rotors in dem Rohr (26) angeordnet ist, und
dass der obere Teil der Zuleitung (25) eine zweite Einlassöffnung (26A) umfasst, die in der Nähe eines Oberteils des Partikelmaterialspeicherbehälters angeordnet ist.

2. Partikelmaterialstrahlvorrichtung nach Anspruch 1 mit einem Leitblech (35), das an der Zuleitung (25) angebracht und so bemessen ist, dass es sich um einen Oberteil und Seiten der Partikelmaterialeingangsseite (9A) des Rotors herum wölbt und diese abdeckt.

3. Partikelmaterialstrahlvorrichtung nach einem der vorhergehenden Ansprüche mit einem Lager, einem Getriebe und wahlweise einem Motor für den Rotor, bei der das Lager, das Getriebe und wahlweise der Motor in einem abgedichteten Gehäuse untergebracht sind, das mit dem Unterteil (23) des Partikelmaterialspeicherbehälters (1) gekoppelt ist.

4. Partikelmaterialstrahlvorrichtung nach einem der vorhergehenden Ansprüche, bei der der Auslass (30) für das strömungstechnische Koppeln mit einer druckbeaufschlagten Gasleitung ausgelegt ist.

5. Partikelmaterialstrahlvorrichtung nach einem der vorhergehenden Ansprüche, bei der der Oberteil (22) des Partikelmaterialspeicherbehälters ein Anschlussstück zum Aufnehmen eines Oberteils der Zuleitung (25) und Befestigen der Zuleitung an Ort und Stelle in dem Partikelmaterialspeicherbehälter (1) aufweist.

6. Partikelmaterialstrahlvorrichtung nach einem der vorhergehenden Ansprüche, bei der ein Abstand zwischen dem Rotor (9) und dem Unterteil (23) des Partikelmaterialspeicherbehälters (1) etwa 0,2 cm bis etwa 0,6 cm beträgt.

7. Partikelmaterialstrahlvorrichtung nach einem der vorhergehenden Ansprüche, bei der der Rotor (9) so in der Öffnung (27) der Zuleitung (25) installiert ist, dass eine Achse (11) des Rotors senkrecht zu einer Längsachse der Zuleitung verläuft.

8. Partikelmaterialstrahlvorrichtung nach einem der vorhergehenden Ansprüche, bei der der Rotor (9) so in der Öffnung (27) der Zuleitung (25) installiert ist, dass eine Achse (11) des Rotors mit einer Seitenwand der Zuleitung auf einer Linie liegt.

9. Partikelmaterialstrahlvorrichtung nach einem der vorhergehenden Ansprüche, bei der die Zuleitung (25) und der Partikelmaterialspeicherbehälter (1) ein zylinderförmiges Rohr umfassen.

10. Partikelmaterialstrahlvorrichtung nach einem der vorhergehenden Ansprüche mit mindestens zwei Reihen am Umfang des Rotors (9) entlang installierter Schöpfbecher, bei der die Becher einer Reihe in Bezug auf die Becher der anderen Reihe in Umfangsrichtung versetzt angeordnet sind.

11. Partikelmaterialstrahlvorrichtung nach einem der vorhergehenden Ansprüche mit mehreren Rotoren, bei der die Schöpfbecher eines Rotors in Bezug auf die des anderen Rotors/der anderen Rotoren in Umfangsrichtung versetzt angeordnet sind.

12. Partikelmaterialstrahlvorrichtung nach einem der vorhergehenden Ansprüche, bei der die Becher von zahnartigen Strukturen gebildet werden, die vom Umfang des Rotors vorstehen.

13. Verfahren zum Strahlen einer Oberfläche mit Partikelmaterial, bei dem eine Partikelmaterialstrahlvorrichtung (2) nach einem der Ansprüche 1 bis 12 eingesetzt wird und das folgende Schritte umfasst:
Bereitstellen eines Vorrats an Partikelmaterial in dem Partikelmaterialspeicherbehälter, Einschalten eines Motors zum Drehen des Rotors mit einer gewünschten Drehzahl, die der gewünschten Materialdosierrate entspricht, und Eindosieren des Partikelmaterials über die Zuleitung in eine druckbeaufschlagte Gasleitung, die außerhalb des Speichervorrats angeordnet ist, und
Strahlen einer Oberfläche durch Einsatz einer Düse, die strömungstechnisch mit der druckbeaufschlagten Gasleitung gekoppelt ist, zum Richten eines druckbeaufschlagten Gas- und Partikelmaterialstroms auf die Oberfläche.

## Revendications

1. Appareil de projection de matière particulaire (20) comprenant :
un dispositif de dosage de matière particulaire (3) ;
une cuve de stockage de matière particulaire (1) présentant une base (23), une partie supérieure (22) et des parois latérales (21) et conçue pour alimenter le dispositif de dosage en matière particulaire ; et
une conduite de distribution (25) pour délivrer la matière particulaire dans une conduite de gaz sous pression,
le dispositif de dosage de matière particulaire comprenant un rotor (9) comprenant une série de poches de ramassage montées le long d'une circonférence du rotor configurée pour tourner afin de ramasser la matière particulaire à partir d'un côté récepteur de matière particulaire du dispositif de dosage et la délivrer vers le haut et de l'autre côté à un côté de distribution du dispositif de dosage où elle tombe dans la conduite de distribution (25),
le dispositif de dosage de matière particulaire (3) étant situé dans la cuve de stockage de matière particulaire et la conduite de distribution comprenant une partie supérieure, disposée à l'intérieur de la cuve de stockage de matière particulaire (1), présentant une première ouverture d'entrée (27) et une partie inférieure, disposée à l'extérieur de la cuve de stockage de matière particulaire (1), présentant une sortie (30) pour distribuer la matière particulaire dans une conduite de gaz sous pression,
**caractérisé en ce que** la partie supérieure comprend un tuyau allongé (26), **en ce que** la première ouverture d'entrée (27) est disposée adjacente à la base (23) de la cuve de stockage de matière particulaire, dans lequel le rotor (9) est monté en partie à l'intérieur de la première ouverture d'entrée de telle sorte qu'un côté récepteur de matière particulaire (9A) du rotor soit disposé à l'extérieur du tuyau (26) et un côté distributeur de matière particulaire (9B) du rotor est disposée à l'intérieur du tuyau (26) et **en ce que** la partie supérieure de la conduite de distribution (25) comprend une seconde ouverture d'entrée (26A) disposée vers une partie haute de la cuve de stockage de matière particulaire.

2. Appareil de projection de matière particulaire selon la revendication 1, comprenant un déflecteur (35) fixé à la conduite de distribution (25) dimensionné pour s'incurver autour et couvrir un sommet et des côtés du côté récepteur de matière particulaire (9A) du rotor.

3. Appareil de projection de matière particulaire selon l'une quelconque des revendications précédentes, comprenant un palier, une boîte de vitesses et éventuellement un moteur pour le rotor, dans lequel le palier, la boîte de vitesses et éventuellement le moteur sont contenus dans un boîtier étanche couplé à la base (23) de la cuve de stockage de matière particulaire (1).

4. Appareil de projection de matière particulaire selon l'une quelconque des revendications précédentes, dans lequel la sortie (30) est configurée pour être couplée fluidiquement à une conduite de gaz sous pression.

5. Appareil de projection de matière particulaire selon l'une quelconque des revendications précédentes, dans lequel la partie haute (22) de la cuve de stockage de matière particulaire comprend un raccord destiné à recevoir une partie haute de la conduite de distribution (25) et à fixer la conduite de distribution en position à l'intérieur de la cuve de stockage de matière particulaire (1).

6. Appareil de projection de matière particulaire selon l'une quelconque des revendications précédentes, dans lequel un jeu entre le rotor (9) et la base (23) de la cuve de stockage de matière particulaire (1) est d'environ 0,2 cm à environ 0,6 cm.

7. Appareil de projection de matière particulaire selon l'une quelconque des revendications précédentes, dans lequel le rotor (9) est monté dans l'ouverture (27) de la conduite de distribution (25) de telle sorte qu'un axe (11) du rotor soit perpendiculaire à un axe longitudinal de la conduite de distribution.

8. Appareil de projection de matière particulaire selon l'une quelconque des revendications précédentes, dans lequel le rotor (9) est monté dans l'ouverture (27) de la conduite de distribution de telle sorte qu'un axe (11) du rotor soit aligné avec une paroi latérale de la conduite de distribution.

9. Appareil de projection de matière particulaire selon l'une quelconque des revendications précédentes, dans lequel la conduite de distribution (25) et la cuve de stockage de matière particulaire (1) comprennent un tuyau cylindrique.

10. Appareil de projection de matière particulaire selon l'une quelconque des revendications précédentes et comprenant au moins deux séries de poches de ramassage montées le long de la circonférence du rotor (9), et dans lequel les poches d'une série sont circonférentiellement décalées par rapport aux poches de l'autre série.

11. Appareil de projection de matière particulaire selon l'une quelconque des revendications précédentes et comprenant une pluralité de rotors, dans lequel les poches de ramassage d'un rotor sont circonférentiellement décalées par rapport à celles du ou des autres rotors.

12. Appareil de projection de matière particulaire selon l'une quelconque des revendications précédentes, dans lequel les poches sont formées par des formations en forme de dents qui dépassent de la circonférence du rotor.

13. Procédé de sablage d'une surface avec une matière particulaire qui utilise un appareil de projection de matière particulaire (2) selon l'une quelconque des revendications 1 à 12, lequel procédé comprend les étapes de :
fourniture d'un réservoir de matière particulaire dans la cuve de stockage de matière particulaire ;
actionnement d'un moteur pour faire tourner le rotor à une vitesse souhaitée correspondant au taux de dosage de matière souhaité, et dosage de la matière particulaire à travers la conduite de distribution dans une conduite de gaz sous pression disposée à l'extérieur du réservoir de stockage ; et
sablage d'une surface à l'aide d'une buse couplée fluidiquement à la conduite de gaz sous pression pour diriger un flux de gaz sous pression et de matière particulaire vers la surface.
